# FASCICULE DE BREVET EUROPEEN

(11) **EP 1 370 190 B1**
(45) Date de publication et mention de la délivrance du brevet: **31.10.2007**
(21) Numéro de dépôt: 02753586.3
(22) Date de dépôt: 21.03.2002
(51) Int. Cl.: A61C 13/00

(54) **PROCÉDÉ DE RÉALISATION D' ÉLÉMENTS DE RESTAURATION DENTAIRE**
VERFAHREN ZUR HERSTELLUNG VON DENTALEN RESTAURATIONSELEMENTEN
METHOD FOR PRODUCING DENTAL RESTORATION ELEMENTS

(30) Priorité: 21.03.2001 FR 0104217
(43) Date de publication de la demande: 17.12.2003
(73) Titulaire: Valery, Michel, 65000 Tarbes (FR); Soucaze-Soudat, Jean-Dominique, 65710 Sainte Marie-De-Campan (FR)
(72) Inventeur: Valery, Michel, 65000 Tarbes (FR); Soucaze-Soudat, Jean-Dominique, 65710 Sainte Marie-De-Campan (FR)
(74) Mandataire: Morelle, Guy Georges Alain
(86) Numéro de dépôt international: PCT/FR2002/000995
(87) Numéro de publication internationale: WO 2002/074183

(56) Documents cités:
- WO-A-94/27523
- DE-A- 19 838 238
- US-A- 5 549 476
- PATENT ABSTRACTS OF JAPAN vol. 1999, no. 01, 29 janvier 1999 (1999-01-29) & JP 10 277065 A (NACHI FUJIKOSHI CORP), 20 octobre 1998 (1998-10-20)

## Description

La présente invention concerne un procédé de réalisation d'éléments rapportés en matériau neutre et de grande précision géométrique destinés, à colmater par inlay ou onlays les dégâts occasionnés sur des tissus durs dentaires, ou bien à la réalisation de couronnes dentaires partielles ou totales, de grande précision, ou bien d'autres dispositifs dentaires rapportés avec prise de mesures in vivo ou sur modèles en cire ou résines ou autres matériaux plastiques modelés par un prothésiste.

En matière d'odontologie, il existe actuellement divers procédés et dispositifs mécaniques destinés à réaliser des obturations de perte de substance de tissus dentaires dues à la carie ou autres, création de couronnes ou autres.

Pour les caries ou altération de tissus dentaires, actuellement, dans le but de supprimer la partie cariée, altérée, le dentiste enlève au moyen d'une fraise ou d'un excavateur les éléments détériorés et il exécute à l'aide des instruments susnommés un logement, préparation dans lequel il introduit soit un matériau plastique: amalgame à base de mercure et d'argent, résine, matériaux composites particuliers, soit une pièce coulée métallique obtenue par le procédé de la cire perdue ou inlay céramique et composite après enregistrement de cette préparation par matériau à empreinte, les deux pièces étant produites par le laboratoire de prothèse dentaire. Les amalgames à usage odontologique ont l'inconvénient d'utiliser des matériaux dont la propagation ultérieure dans le milieu ambiant est mal maîtrisée notamment en ce qui concerne les pollutions dues au mercure. Pour les résines composites, ces dernières présentent un taux de retrait important avec effet de percolation, ainsi, des micro fissures parviennent à se former, altérant l'étanchéité de l'obturation et laissant le passage aux liquides septiques (salive), pouvant entraîner une altération des tissus durs de la dent.

Il existe aussi des appareillages plus récents de réalisation d'inlays, onlays ou couronnes en céramique, dont la prise de mesure s'effectue au moyen d'une caméra vidéo. Préalablement à l'analyse vidéo, le dentiste doit disposer une poudre blanche sur les zones de la cavité à analyser et ce en bouche. Cette poudre est soumise aux lois de la gravitation et elle est plus difficile d'emploi au maxillaire qu'à la mandibule. Ensuite une caméra vidéo analyse les nuances de gris de la zone visualisée. Un logiciel informatique évalue les limites de la cavité, les différentes profondeurs et il détermine ainsi le volume en fonction de ces nuances de gris. Ensuite l'opérateur délimite informatiquement au moyen d'une souris, les limites latérales du plancher de la cavité et les limites juxta-gingivales de la dent afin de réaliser le type de reconstitution dentaire recherché. Ce procédé est peu précis aux vues de la technologie de mesure employée et il présente de nombreux inconvénients. Les analyses de nuance de gris donnent une précision faible, notamment en ce qui concerne les zones d'ombre qui sont totalement inaccessibles à l'analyse de ce procédé. Ensuite les délimitations latérales de l'emplacement de la reconstitution ne sont pas des délimitations précises de l'emplacement défini mais un simple emplacement donné par l'opérateur sans prise en compte des aspects de rugosité et de position précise dans l'espace des travaux effectués préalablement par le dentiste. Les limites périphériques juxta-gingivales de la dent ne sont pas non plus bien définies car elles sont déterminées de façon arbitraire par l'opérateur. Les faces proximales et occlusales sont issues d'une banque de données informatique qui dispose dans sa mémoire de nombreux profils de dents. Concernant le repérage géométrique dans l'espace, il n'y a aucun lien de référence de positionnement fixe dans l'espace entre la caméra vidéo chargée de la prise de vues et la cavité concernée, car cette prise de vues se fait à main levée. Il n'est pas non plus tenu compte des profils des dents antagonistes qui viendront se positionner juste en face de l'élément rapporté.

On connaît le document WO 94/27523 qui se rapporte à un procédé et un dispositif pour la création d'une maquette ou modèle de restauration de dent, crée à partir d'une surface scannée d'une dent préparée ou d'une empreinte de dent. Le dispositif fonctionne de la manière suivante : l'objet à mesurer, qui peut être une dent, une empreinte de dent ou une copie de dent comme par exemple un moulage de dent, est placé sur un plateau rotatif et mobile en translation suivant l'axe de rotation, ceci grâce à un système de vis-écrou ; le déplacement de l'objet à mesurer est hélicoïdal. Un faisceau lumineux collimaté de faible diamètre afin d'obtenir un petit point de lumière sur l'objet, par exemple un rayon laser, est dirigé vers l'objet, et les informations de mesure concernant la surface de l'objet sont mémorisées selon un pas de rotation d'angle Φ de l'objet. Un degré de précision élevé est obtenu pour la mesure de l'objet en utilisant le principe de triangulation. Les valeurs mesurées sont ensuite utilisées dans une analyse numérique ou mathématique au moyen d'un ordinateur, afin de générer un groupe de coordonnées qui décrit des surfaces limitatives représentatives d'une restauration de dent ou de la restauration d'une partie de dent, telle qu'une coiffe de dent ou une couronne, mémorisée dans l'ordinateur. Ensuite les coordonnées sont modifiées pour fournir un fichier de données représentatif de l'objet à fabriquer qui prend en compte des facteurs de grossissement, des bordures de préparation, ou autre.

On connaît en outre le document DE 198 38 238 qui se rapporte à un procédé de fabrication d'un appareil dentaire, en vue de la restauration d'au moins une dent ou d'une zone de la mâchoire. Une prise de mesure des mâchoires supérieure et inférieure est effectuée afin de fabriquer des modèles de celles-ci, en tenant compte des angles des condyles, des angles de Fischer et Benett, Side-Shift, pour calculer la restauration et pour fabriquer un appareil dentaire optimal. Ces modèles de mâchoires peuvent être explorés mécaniquement ou par optique, afin de recueillir des données digitalisées associées au point de référence de l'axe de rotation de l'articulateur. Les surfaces des modèles sont ainsi balayées à l'aide d'un faisceau lumineux transmis par un projecteur dans la zone de la dent à restaurer, faisceau lumineux qui peut comporter un motif à bandes lumineuses. Une caméra CCD précise l'image du modèle qui peut être obtenue par un balayage total. Pour mesurer les dimensions des modèles des mâchoires supérieure et inférieure, on place un modèle sur un plateau rotatif via un support incliné en forme de coin, puis on fait tourner autour d'un premier axe le support et la caméra CCD dont l'axe optique est placé dans l'axe de rotation du plateau rotatif, et on fait également tourner le modèle autour d'un deuxième axe perpendiculaire au plan incliné défini par le coin qui supporte le modèle, permettant ainsi d'obtenir une conception géométrique spatiale du modèle.

Il existe aussi d'autres systèmes de numérisation ou d'enregistrement des contours de préparation prothétique avec sonde d'enregistrement munie d'un palpeur simple ou d'un saphir, la préparation étant montée sur une table tournante, elle est parfois centrée par une diode laser. Ce procédé nécessite un contact physique entre le palpeur ou le saphir et la préparation ce qui exclut l'enregistrement de matériaux de faible résistance mécanique voire mous.

La présente invention se propose de remédier à ces inconvénients en proposant, tel qu'il est spécifié dans la revendication 1, un procédé de réalisation d'éléments rapportés en matériau neutre et de grande précision géométrique destinés, à obturer par différents types de reconstitutions les dégâts occasionnés par des caries ou altération de tissus dentaires, ou bien destinés à la réalisation de couronnes dentaires partielles ou totales de grande précision, ou autres dispositifs dentaires rapportés, avec prise de mesures directes ou indirectes, transmises ou non au technicien prothésiste par procédé informatique.

Les avantages obtenus sont: réalisation de pièces rapportées de nature neutre non polluantes soit durant leur séjour en bouche soit lors de leur retrait, grande précision de l'élément fini qui peut avoisiner les deux centièmes de millimètre, rapidité et facilité de mise en oeuvre.

Ce procédé peut être réalisé de deux façons, notamment en odontologie: soit à partir d'une maquette réalisée en bouche (in vivo), ou bien in vitro: à partir d'une empreinte dentaire classique, la maquette est élaborée directement au laboratoire.

On comprendra mieux la présente invention à la lecture de la description détaillée qui va suivre en regard des dessins annexés et donnant à titre indicatif mais nullement limitatif une forme de réalisation de l'invention.

Sur les dessins:

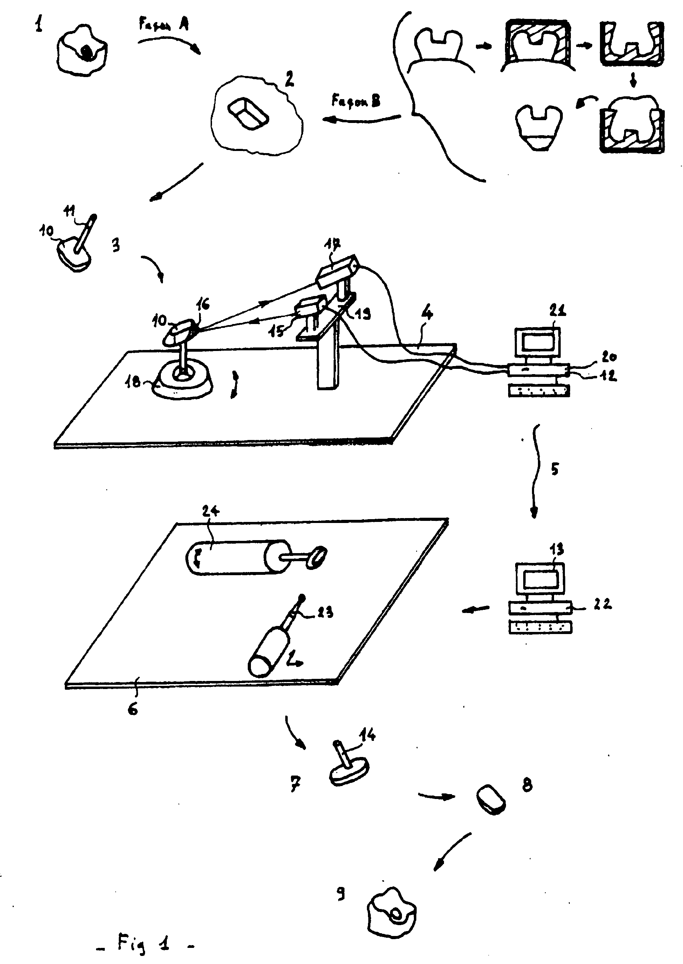

- La figure 1 représente à échelle réduite, une vue schématique de l'ensemble des opérations à réaliser lors de la mise en oeuvre du procédé.

En référence à la figure 1, le procédé est applicable en général à la réalisation de plusieurs éléments destinés à colmater les dégâts occasionnés aux dents des mammifères.

Pour mettre en oeuvre le procédé il faut dans un premier temps constituer une maquette visant à combler le ou les pertes de substance de ou des organes dentaires. Cette maquette peut être réalisée de deux façons, soit directement en bouche, façon A, soit au laboratoire de prothèse façon B après une prise d'empreinte de la perte de substance à l'aide d'un matériau conventionnel (alginate, silicone ou autre). Cette empreinte sera traitée au laboratoire de prothèse de manière à obtenir un moulage en positif.

Dans la première façon A, le dentiste, dans l'opération 1 commence par enlever avec une fraise ou un excavateur, les tissus dentaires déficients pour mettre à jour et définir un nouveau volume 2 limité par les tissus sains, avec forme de paroi en dépouille. Jusqu'alors, ces travaux nécessitaient la réalisation d'une cavité avec ou sans contre dépouille. Avec le procédé selon l'invention, la contre dépouille est proscrite.

La deuxième façon B consiste à prendre une empreinte en bouche de la préparation dentaire à l'aide de matériau à empreinte classique et selon une méthode classique habituelle en dentisterie, puis cette empreinte est coulée en plâtre et, à partir de ce modèle positif, on rejoint la première façon déjà décrite pour aboutir au nouveau volume 2. Le praticien doit également prendre une empreinte antagoniste à la préparation afin de pouvoir élaborer manuellement la face occlusale des différentes maquettes.

A partir du nouveau volume 2, il est réalisé une maquette 3 au moyen de résine opaque photo durcissable 10 dans laquelle on loge avant complet durcissement un bâtonnet de manoeuvre 11. Après complet durcissement, on retire l'ensemble bâtonnet 11 solidaire de la résine opaque durcie 10, laquelle résine est une maquette du volume à obturer.

L'ensemble bâtonnet 11 et maquette de résine 10 est ensuite positionné sur le plateau rotatif 18 d'une machine 4 de prise de mesure de trois dimensions au moyen d'analyse de front d'onde, par exemple la machine "OptoTOP".

La machine "OptoTop" utilise un système de métrologie 3D dans lequel les prises de vues sont enregistrées et analysées en trois dimensions. L'ensemble du fonctionnement du système "OptoTop" est fondé sur un principe de la triangulation optique : la topométrie qui utilise une projection de lumière blanche structurée et à décalage de phase.

A cet effet, un motif rectangulaire lumineux construit à partir de plusieurs bandes lumineuses est projeté sur la maquette 10 dont le volume est à mesurer. Les bandes lumineuses 16 sont projetées de biais sur la maquette et elles épousent parfaitement les formes de celle ci. La machine 4, via une caméra CCD 17, disposée latéralement par rapport au projecteur 15, enregistre quasi simultanément, deux images, l'une classique en deux dimensions et la deuxième qui est celle des bandes déformées, projetées sur la maquette 10 à mesurer. Le projecteur 15 qui génère les bandes 16 est situé de biais par rapport à la caméra 17, le projecteur et la caméra sont liées mécaniquement et géométriquement au plateau rotatif support de maquette 18 par un bâti 19, afin d'obtenir une bonne triangulation. A partir d'une unité informatique 21, un logiciel de comparaison 12 analyse ensuite les deux images pour calculer le volume observé par la caméra, sous un certain angle. Le plateau tournant 18 permet d'exposer successivement toutes les faces de la maquette aux rayons lumineux. Plusieurs prises de mesure sont effectuées. Ces mesures sont ensuite converties en fichiers informatiques qui caractérisent le maillage du volume final de la maquette, soit sous forme de triangles (format .st1), soit sous forme de nuages de points x y z (format ascii). Ces fichiers informatiques sont alors propres à être utilisés par d'autres logiciels.

Ces fichiers sont ensuite soit confrontés à d'autres fichiers soit modifiés manuellement au moyen d'un logiciel de correction ou retouche de volume 20, par exemple Polyworks software. Le fichier issu de ces modifications et caractérisant la forme définitive à obtenir est ensuite soit traité sur place sur une machine à commande numérique connexe 6 soit il est expédié via un réseau informatique 5 vers une unité informatique 13 qui pilote cette même machine à commande numérique 6 non connexe, située ailleurs dans un autre lieu géographique. Après réception par cette machine 6 des fichiers informatiques ci dessus décrits, cette dernière est en mesure de tailler à l'aide de fraises 23 ou autres instruments d'usinage pilotés par la machine et son logiciel, une pièce débitée 24 ayant en fin d'opération les caractéristiques de volume les plus approchantes de celles de la maquette réalisée initialement.

Dans cet esprit, on peut utiliser par exemple un des trois types connus de machine à commande numérique: machine à commande numérique fonctionnant sur trois axes, quatre axes ou cinq axes. Pour l'utilisation de la machine à commande numérique sur trois axes, il faudra procéder par retournement de la pièce à usiner. Pour l'utilisation de la machine à commande numérique sur quatre axes, en mode circulaire, on pourra effectuer l'usinage de la pièce débitée à usiner 24 soit sur la génératrice, soit sur l'axe de rotation, soit en hélice. Pour l'utilisation de la machine à commande numérique sur cinq axes, on utilise la combinaison des cinq axes de la machine. Le logiciel 22 intégré à ces différentes machines, par exemple le logiciel Maquette Volume, pourra à la demande intégrer des rajouts d'une ou plusieurs attaches carrées ou rectangulaires 14 et effacer les traces du bâtonnet 11 de la maquette.

On obtient donc en sortie de cette machine une pièce 7 approchante du volume demandé avec rajout d'une ou plusieurs attaches 14 destinées à maintenir physiquement le volume définitif sur la pièce de débit 24 dont il est issu. Cette ou ces attaches 14 sont détruites à la fraise soit par le dentiste soit par le prothésiste pour obtenir enfin une pièce 8 qui est la contre partie du volume à obturer. Cette pièce 8 est ensuite insérée par simple collage dans le volume initial 2. La dent 9 est ainsi reconstituée.

Sur le même principe, le procédé s'applique aussi à la réalisation de couronnes prothétiques dentaires réalisées à partir de la deuxième façon B ci-dessus décrite. A partir du modèle positif, il est réalisé d'une part un enregistrement en 3D du moignon, celui-ci pouvant ou non être enduit d'un vernis compensateur d'épaisseur. Après intervention du prothésiste dentaire, et présentation des moulages antagonistes, il est réalisé d'autre part un enregistrement de la coiffe réalisée en matériau dur ou mou, opaque.

Le logiciel d'enregistrement 3D déjà cité 12, réalise ensuite automatiquement ou non, le lien géométrique entre la mesure du moignon et celle de la maquette, modelée par le prothésiste.

On obtient donc " in fine " un volume virtuel qui définit l'intrados et l'extrados de la coiffe ou couronne finale, à usiner.

Pour les bridges qui sont un assemblage de coiffes et de pontiques, le procédé reprend l'ensemble des éléments ci dessus décrits pour les maquettes et couronnes, ces volumes étant liés.

La présente invention est avantageuse du fait que l'on obtient une grande précision des éléments rapportés, la possibilité d'une neutralité effective de ces derniers, constitués de matériaux divers tels que céramique, marbre, pierre ordinaire, pierre précieuse, matériau coloré etc., une bonne compatibilité entre les contacts des faces des dents antagonistes et adjacentes.

Il va de soi que l'invention a été décrite ci-dessus à titre d'exemple préférentiel indicatif mais nullement limitatif et que l'on pourra introduire toute équivalence dans ses éléments constitutifs sans sortir de son cadre défini par les revendications annexées.

## Revendications

1. Procédé de réalisation d'éléments rapportés en matériau neutre et de grande précision géométrique, destinés à obturer par différents types de reconstitution prothétique les dégâts occasionnés dans les dents par les caries dentaires ou altération de tissus ayant d'autres causes, ou bien destinés à la réalisation de couronnes dentaires de grande précision, ou autres dispositifs dentaires rapportés, procédé dans lequel :
- une maquette (10) visant à combler les manques de tissus dentaires détruits est réalisée, soit in vivo en mettant à jour et définissant un nouveau volume (2) limité par des tissus sains, avec forme de paroi en dépouille, soit in vitro en prenant une empreinte en bouche d'une préparation dentaire à l'aide d'un matériau à empreinte, cette empreinte étant ensuite coulée en plâtre et, à partir de ce modèle positif en plâtre en mettant à jour et définissant un nouveau volume (2), ladite maquette logeant un bâtonnet (11) de manoeuvre,
- puis plusieurs prises de mesure de cette maquette (10) sont réalisées en 3D au moyen d'un appareil (4, 15, 17) de mesure tridimensionnelle à analyses de front d'onde lumineux, analyses en volume effectuées au moyen de prises de vues comprenant l'utilisation d'un motif rectangulaire lumineux construit à partir de plusieurs bandes lumineuses (16) projetées sur la maquette par un projecteur (15) situé de biais par rapport à une caméra (17) qui enregistre quasi simultanément, deux images, l'une classique en deux dimensions et la deuxième qui est celle des bandes déformées projetées sur la maquette (10) à mesurer, le projecteur (15) et la caméra (17) étant liés mécaniquement et géométriquement à un plateau rotatif (18) support de maquette par un bâti (19) afin d'obtenir une bonne triangulation, ladite maquette étant positionnée sur ledit plateau rotatif via ledit bâtonnet de manoeuvre,
- suivie d'un traitement informatique (12) pour remodeler les fichiers de morceaux de volumes entre eux,
- puis d'une modification informatique des fichiers pour déterminer exactement le profil recherché,
- puis d'un usinage avec une machine (6, 23, 24, 22) à commande numérique, de l'élément final à rapporter comportant au moins une attache (14).

2. Procédé suivant la revendication 1, dans lequel lesdites bandes lumineuses sont constituées de lumière blanche structurée à décalage de phase.

3. Procédé suivant la revendication 1 ou 2, dans lequel il consiste à projeter lesdites bandes lumineuses de biais sur la maquette.

4. Procédé suivant l'une quelconque des revendications 1 à 3, dans lequel le matériau utilisé est un matériau neutre genre céramique, naturel genre marbre, artificiel genre plastique, ou décoratif coloré.

5. Procédé suivant l'une quelconque des revendications 1 à 4, dans lequel il comprend l'usinage d'éléments prothétiques multiples et reliés entre eux, classiquement élaborés grâce à la méthode de la cire perdue.

6. Utilisation du procédé suivant l'une quelconque des revendications 1 à 5, à la réalisation d'inlays au moyen d'une prise d'empreinte simple.

7. Utilisation du procédé suivant l'une quelconque des revendications 1 à 5, à la réalisation de couronnes partielles ou totales.

## Claims

1. Method of producing high-geometric-precision implant elements made from a neutral material and intended to fill by means of different types of prosthetic reconstruction the damage caused in teeth by dental caries or by alteration of tissues having other causes, or intended to produce high-precision dental crowns, or other implanted dental devices, a method wherein:
- a model (10) which is designed to fill the missing dental tissue which has been destroyed is made, either in vivo updating and defining a new volume (2) bordered by healthy tissue and having the shape of a tapered wall, or in vitro by taking an impression in the mouth of a dental preparation using an impression compound, this impression then being cast in plaster and, from this positive plaster model, updating and defining a new volume (2), said model housing a manipulating rod (11),
- then a plurality of measurements of this model (10) are taken in 3-D by means of a three-dimensional measuring apparatus (4, 15, 17) with light wavefront analyses, volume analyses carried out by means of shots, comprising the use of a luminous rectangular pattern constructed from a plurality of luminous bands (16) projected on the model by a projector (15) which is positioned at an angle to a camera (17) which records quasi-simultaneously two images, the one conventional in two dimensions and the second which is that of the deformed bands, projected upon the model (10) to be measured, the projector (15) and the camera (17) being mechanically and geometrically linked to a revolving platform (18) which provides support to the model by means of a frame (19) in order to obtain a good triangulation, said model being positioned on said revolving platform via said manipulating rod,
- followed by electronic processing (12) in order to remodel the files of sections of volumes between themselves,
- then electronic modification of the files to determine exactly the desired profile,
- then machining with a digitally-controlled machine (6, 23, 24, 22) of the final element to be implanted which includes at least one fastener (14).

2. Method according to claim 1, wherein said luminous bands are made up of structured and phase-offset white light.

3. Method according to claim 1 or 2, wherein it consists in projecting the said angled luminous bands on the model,

4. Method according to any one of claims 1 to 3, wherein the material used is a neutral material of ceramic type, natural marble type, artificial plastic type, or a coloured decorative material.

5. Method according to any one of claims 1 to 4, wherein it includes the machining of multiple prosthetic elements linked to one another, conventionally produced by the disposable wax method.

6. Utilisation of the method according to any one of claims 1 to 5, for the production of inlay by means of taking a simple impression.

7. Utilisation of the method according to any one of claims 1 to 5, for the production of partial or full crowns.

## Patentansprüche

1. Verfahren zur Herstellung von aufgesetzten Elementen aus neutralem Material und von hoher geometrischer Präzision, die dazu bestimmt sind, durch verschiedene Arten von prothetischer Rekonstruktion die Schäden zu verschließen, die in den Zähnen durch Zahnkaries oder eine Gewebeveränderung anderen Ursprungs verursacht wurden, oder die zur Herstellung von Zahnkronen mit hoher Präzision oder anderen aufgesetzten Zahnvorrichtungen bestimmt sind, wobei bei diesem Verfahren:
- eine Vorlage (10) hergestellt wird, um das fehlende, zerstörte Zahngewebe aufzufüllen, und zwar entweder in vivo, indem ein neues Volumen (2) freigelegt und definiert wird, das durch gesunde Gewebe begrenzt ist und die Form einer abgeschrägten Wand aufweist, oder in vitro, indem im Mund mit Hilfe eines Abdruckmaterials ein Abdruck einer Zahnpräparierung genommen wird, wobei dieser Abdruck anschließend in Gips gegossen wird, und wobei ausgehend von diesem positiven Modell aus Gips ein neues Volumen (2) freigelegt und definiert wird, wobei die Vorlage einen Stab (11) zur Handhabung aufnimmt,
- anschließend mit Hilfe einer Vorrichtung (4, 15, 17) zur dreidimensionalen Vermessung mit Lichtwellenfrontanalyse mehrere Vermessungen dieser Vorlage (10) in 3D durchgeführt werden und Volumenanalysen durchgeführt werden, und zwar mit Hilfe von Aufnahmen unter Verwendung eines rechteckigen Lichtmusters, das ausgehend von mehreren Lichtstreifen (16) gebildet wird, die durch einen Projektor (15) auf die Vorlage projiziert werden, der in Bezug auf eine Kamera (17) schräg angeordnet ist, die praktisch gleichzeitig zwei Bilder aufnimmt, nämlich ein herkömmliches, zweidimensionales, und ein zweites, das jenes der verformten Streifen ist, die auf die zu vermessende Vorlage (10) projiziert werden, wobei der Projektor (15) und die Kamera (17) mechanisch und geometrisch mit einer drehbaren Platte (18) verbunden sind, die die Vorlage durch ein Gestell (19) trägt, um eine gute Dreiecksvermessung zu erzielen, wobei die Vorlage durch den Handhabungsstab auf der drehbaren Platte angeordnet wird,
- sodann eine elektronische Bearbeitung (12) durchgeführt wird, um die Dateien der Volumenabschnitte mit Bezug zueinander neu zu modellieren,
- sodann eine elektronische Veränderung der Dateien erfolgt, um das gewünschte Profil exakt zu definieren,
- sodann mit einer digital gesteuerten Maschine (6, 23, 24, 22) eine Bearbeitung des aufzusetzenden endgültigen Elements erfolgt, das mindestens einen Verbindungsteil (14) umfasst.

2. Verfahren nach Anspruch 1, wobei die Lichtstreifen aus strukturiertem weißem Licht mit Phasenverschiebung gebildet sind.

3. Verfahren nach Anspruch 1 oder 2, wobei es darin besteht, die Lichtstreifen schräg auf die Vorlage zu projizieren.

4. Verfahren nach einem der Ansprüche 1 bis 3, wobei das verwendete Material ein neutrales Material vom Typ Keramik, ein natürliches Material vom Typ Marmor, ein künstliches Material vom Typ Kunststoff oder ein dekoratives, gefärbtes Material ist.

5. Verfahren nach einem der Ansprüche 1 bis 4, wobei es die Bearbeitung von mehreren, miteinander verbundenen prothetischen Elementen umfasst, die auf herkömmliche Weise mit Hilfe des Wachsausschmelzverfahrens gebildet wurden.

6. Verwendung des Verfahrens nach einem der Ansprüche 1 bis 5 zur Herstellung von Inlays durch die Abnahme eines einfachen Abdrucks.

7. Verwendung des Verfahrens nach einem der Ansprüche 1 bis 5 zur Herstellung von Teil- oder Vollkronen.
